# EUROPEAN PATENT APPLICATION

(11) **EP 2 458 545 A1**
(43) Date of publication of application: **30.05.2012**
(21) Application number: 11306581.7
(22) Date of filing: 29.11.2011
(51) Int. Cl.: G06Q 10/10, G06Q 30/02, G06Q 10/06, G06Q 30/06

(54) **Method of and apparatus for managing data representative of a business in a database**

(30) Priority: 30.11.2010 US 41839010 P
(71) Applicant: FRANCE TELECOM, 75015 Paris (FR)
(72) Inventor: Geller, Chai, San Francisco, CA 94110 (US)

(57) **Abstract**

A computer implemented method of finding, in a first database using a social network, a business entity providing a desired product or service, the method comprising: receiving, via a network from a user terminal of a first social network user, search criteria data representative of search criteria for a desired product or service, the first social network user being associated with a first social graph defining one or more relationships between the first social network user and further social network users of the social network; transmitting search criteria data to a first database storing a directory of businesses entities providing products or services; receiving from the database a plurality of identifier data, each identifier data identifying a respective business entity providing a product or service satisfying the search criteria; determining for each identified business entity if there is a link between the identified business entity and any of the further social network users linked to the first social network user by the first social graph; providing, for display on the user terminal, a list of selectable identified business entities and for those identified business identities in the list for which a link between at least one of said further social network user exists, displaying relationship data identifying relationships between the said business entity and any of the further social network users.

## Description

### FIELD OF THE PRESENT SYSTEM

The present system relates in general to a method and apparatus for managing data representative of a business in a database. In at least one embodiment the present system relates to a method and apparatus for finding, in a database using a social network, business entities providing a desired product or service. Another embodiment relates to a method and apparatus for generating a database of business related data.

### BACKGROUND OF THE PRESENT SYSTEM

With the proliferation of business information services on the Internet the management of business related information is becoming more and more complex. Business information services include business directories such as Yellow Pages, 118 712 etc as well as service review sites reviewing services and businesses such as yelp, trip advisor, and the like. With the multitude of data sources providing information on business entities a user searching for a business providing a desired product or service is provided with an overwhelming amount of information and consequently selecting the most suitable is becoming more and more difficult. The number of business entries generated by a search request can be unmanageable and the entries displayed on the first page of results may not be the most relevant entries to the user

The use of digital social networking applications available via the internet such as, but not limited to, Facebook (RTM), Twitter(RTM) Linked In(RTM), MySpace(RTM), Bebo(RTM) Hi5(RTM) etc and the like, is increasing. Such applications allow users to share content and information within communities of online users and to provide a variety of ways for users to interact with each other. Users typically make connections with other users of the social networking application in order to receive content or updates on their 'friends' activities. However, existing social networks are primarily communication systems between human people to people social contacts, or between people to people business contacts.

### SUMMARY OF THE PRESENT SYSTEM

To better address one or more of the foregoing concerns, a first aspect of the present system provides a method of searching, using a social network and a first database, for a business entity providing a desired product or service, the method comprising: receiving, via a network from a user terminal of a first social network user, search criteria data representative of search criteria for a desired product or service, the first social network user being associated with a first social graph defining one or more relationships between the first social network user and further social network users of the social network; transmitting search criteria data to a first database storing a directory of businesses entities providing products or services; receiving from the database a plurality of identifier data, each identifier data identifying a respective business entity providing a product or service satisfying the search criteria; determining for each identified business entity if there is a link between the identified business entity and any of the further social network users linked to the first social network user by the first social graph; and providing, for display on the user terminal, a list of selectable identified business entities and for those identified business identities in the list for which a link between at least one of said further social network user exists, displaying relationship data identifying relationships between the said business entity and any of the further social network users.

A second aspect of the present system provides a data management server for providing data on at least one business entity providing a desired product or service, the data management server comprising: a communication interface for: connection via a network to a user terminal of a first social network user, for reception of search criteria data representative of search criteria for a desired product or service, the first social network user being associated with a first social graph defining one or more relationships between the first social network user and further social network users of the social network; transmission of search criteria data to a first database storing a directory of businesses entities providing products or services; reception from the database a plurality of identifier data, each identifier data identifying a respective business entity providing a product or service satisfying the search criteria; a processor for determining for each identified business entity if there is a link between the identified business entity and any of the further social network users linked to the first social network user by the first social graph; and providing, for display on the user terminal, a list of selectable identified business entities and for those identified business identities in the list for which a link between at least one of said further social network user exists, displaying relationship data identifying relationships between the said business entity and any of the further social network users.

A third aspect of the present system, provides a computer implemented method of generating a database storing business-person link data defining links between users of social network services and business entities providing a desired product or service, the method comprising: transmitting search criteria data, received from a user terminal, for a desired product or service, to a first remote database storing a directory of businesses entities providing products or services; receiving from the first remote database a plurality of identifier data, each identifier data identifying a respective business entity providing a product or service satisfying the search criteria; transmitting the identifier data to the user terminal, for display on the user terminal, of a list of identified business entities; in response to a request received from the user terminal to link the user with a business entity selected by the user from the identified business entities, storing business-person link data defining a relationship between the user of the user terminal and said selected business entity, wherein the user belongs to a social network and is associated with a social graph defining one or more relationships between said user and further social network users of the social network, and wherein if search criteria for a product or service provided by the said business entity is received from a further social network user related by the social graph to the user, an indication of the business-person link between the business entity and the user is provided to the further social network user.

In embodiments of the present system the method or the apparatus may include one or more of the following features:
- the search criteria data includes at least one of a keyword characteristic of the desired product or service and a location identifier indicating a desired geographical region of the business entity.
- on selection of an identified business entity, determining if the selected business entity has presence on another data communication server accessible via a network and providing business related data on business entities, and if it is determined that the selected business entity has presence on another data communication server, retrieving business related data for the selected business entity from the other data communication server for display of said retrieved business related data on the user terminal. Said retrieved business related data may be storedin a second database.
- on selection of an identified business entity by a user, whether or not information relating to a selected business entity is stored in the second database and if it is determined that information relating to the selected business entity is stored in the second database retrieving said information from the second database, otherwise retrieving information from one or more of the said data communication servers and storing the retrieved information in the second database.
- establishing a business-person link between a business entity, selected by the social network user from the displayed list, and the social network user and storing an indication of said business-person link.
- in response to a request, received from the user terminal, for a recommended business entity providing a specific service or product of the further social network users, transmitting recommended business entity data of one or more of the social network users to the user terminal for display on the user terminal.

At least parts of the methods according to the present system may be computer implemented. Accordingly, the present system may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present system may take the form of a computer program product embodied in any tangible medium of expression having computer usable program code embodied in the medium.

Since the present system can be implemented in software, the present system can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the present system will now be described, by way of example only, and with reference to the following drawings in which:-
Figure 1 is a schematic block diagram of a system for managing data representative of businesses according to at least one embodiment of the present system;
Figure 2 is sequential diagram of a searching for a business entity providing a desired product or service according to an embodiment of the present system; and
Figures 3A to 3B are example of graphical user interfaces displayed on the terminal of the user according to embodiments of the present system.

### DETAILED DESCRIPTION OF THE PRESENT SYSTEM

Embodiments of the present system is described in what follows with reference to flowchart illustrations and block diagrams of methods, apparatus (systems) and computer program products. It will be appreciated that each block of the flowchart illustrations and/or block diagrams, and combinations of blocks in the flowchart illustrations and/or block diagrams, may be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

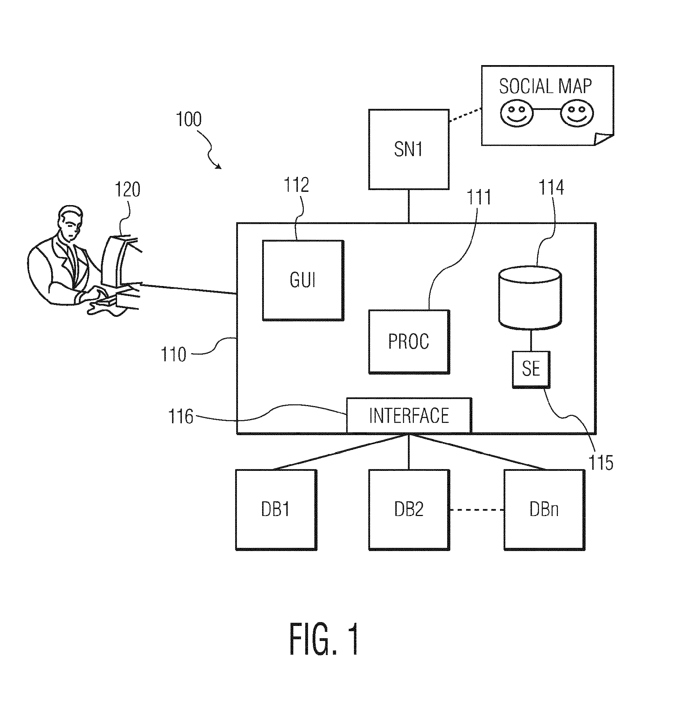

A particular embodiment of the present system will be described with reference to Figures 1 to 3B.

Figure 1 is a schematic block diagram illustrating network system architecture 100 of a non-limiting example of a system for managing data representative of business entities providing a product or service according to an embodiment of the present system.

In the non-limiting example illustrated in Figure 1 the network system includes a data management server 110, connectable via a data communication network to a user terminal 120, to at least one social networking website server SN1, and to a number of business information databases DB1 to DBn storing data related to business entities providing a product or service.

The data management server 110 includes a processor 111 for execution of computer instructions to perform data management tasks and hosts a website application module 112 for providing a user interface to a to user terminal 120 enabling the user of the user terminal 120 to interact with the data management server 110. The user interface in this embodiment is a graphical user interface displayable on the screen of the user terminal 120 which may be accessed by a web browser or mobile browser. The user interface can be used for executing a user initiated search based on search criteria established by the user, for displaying results of the search and for enabling interaction with the results of the search. While in this embodiment the user interface is a web page provided by a website software application module 112, hosted by the data management server 110 and accessible by a browser, it will be appreciated that the interface displayed on the user terminal may be any locally executable application or any remotely executable application providing a user interface on the screen of a user terminal 120.

The data management server also includes a database 114 which may be implemented using MySQL. While in this embodiment the database 114 is located locally on the data management server 110 it will be appreciated that in further embodiments of the present system the database 114 may be located remotely to the data management server 110 and accessible via a network or other data communication link. The data stored in database 114 can be indexed by a search engine 115.

The database 114 may also store business link data defining person-business links established between social network users and business entities. In some embodiments the business link data may be stored in a separate memory.

The data management server 110 further includes one or more network interfaces 116 for establishing connections via a network to user terminal 120 to business information servers DB1 to DBn and to social networking sites such as SN1.

It will be understood that in the context of the present system the user terminal 120 may be any type of fixed or mobile data communication terminal capable of interacting with a network to receive and send data and to display a user interface on a display screen of the terminal enabling the user to interact remotely with data management server 110. Such user terminals may include, but are not limited to, a fixed or mobile personal computer, a portable smartphone, a PDA or the like.

Social Networking site SN1 may be any social networking site hosted by one or more remote servers allowing registered users of the site to interact with one or more other registered social network users with whom they have established a connection and to share data content and activity updates with the other registered social network users. The social networking site SN1 provides a network user map which defines the relationships between a registered user of the social networking site and other registered users of the social networking site. A registered social network user may be related to other registered social network users by different degrees of separation of contacts, for example 1-step contacts are directly connected to the user, 2-step contacts are connected to the user via the 1-step contacts and 3-step contacts are connected to the user via the 2-step contacts and so on. A social network user can establish direct connections with another user by sending a connection request to the other user.

Network user maps of registered users of the data management server who are also registered users of social networking sites may be stored in database 114 of the data management server 110 and may be updated via the respective social network server, or may be accessed via the network at the social network server SN when required.

Business information servers DB1 to DBn host business information services including business directories such as Yellow Pages, 118 712 having a database storing lists of business entities and relevant information such as location and contact information and a search engine for indexing the stored data. The business information servers also include servers hosting service review sites reviewing services and businesses such as yelp, trip advisor, and the like. The business information servers DB1 to DBn are operable to provide desired data related to business entities to the data management server 110 via a network.

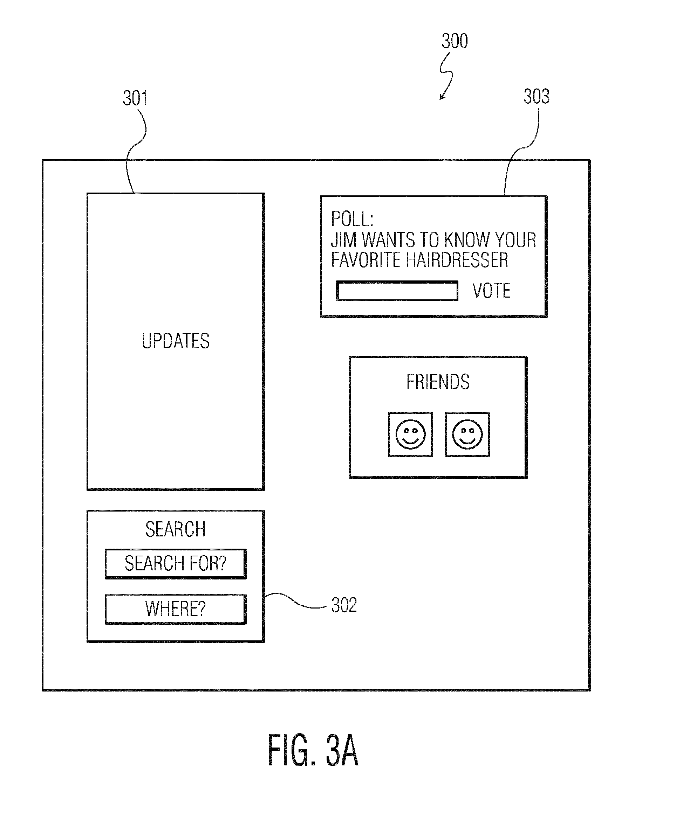

An example of a graphical user interface generated by the GUI application module 112 is illustrated in Figure 3A. The graphical user interface 300 displays data and displays interfaces for interacting with data management server 110. Displayed information includes, but is not limited to, updates of social contacts in zone 301 and linked business entities, results from a search for a business entity. A display interface 302 for searches, a display interface 303 for carrying out and displaying results of a poll is provided.

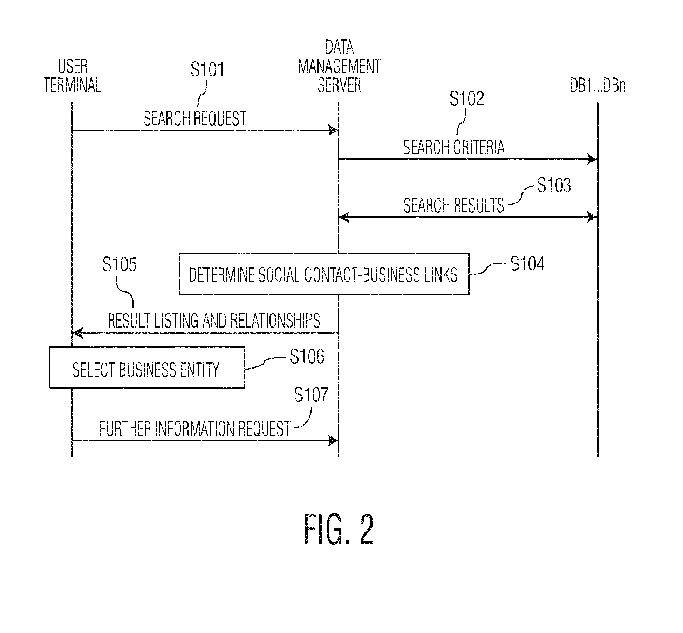

A method of searching for a business entity providing a desired product or service will now be described with reference to Figure 2.

In step S101 a user using user terminal 120 initiates a search for a business in a particular geographical region providing a desired product or service. For example, with reference to Figure 3A the user may wish to find a sushi restaurant in Paris. To initiate the search the user by means of the graphical interface 300 provided by application module 112 inputs in the search interface 302 the keywords "sushi" "restaurant" and the location information "Paris" defining the region in which the user wishes to find the sushi restaurant, as search criteria and transmits the search criteria to the data management module 110. In some cases the user may provide more specific information on the desired location in the search criteria such as in the vicinity of the Eiffel Tower in Paris, in which case the words "Eiffel Tower" or "Paris" "75007" may be input. In some embodiments of the present system, the location may be set at an over-rideable default location in accordance with user preferences or in accordance with automatic geographical locating method such as a GPS module or an IP address detection module which determines the location of the user terminal 120. In certain embodiments of the application, other search criteria may be added such as opening times or other desired search parameters.

The user is registered with social networking website SN1. The social networking website SN1 has a network user map as described above which defines the relationships between the user and other registered users of the social networking site, referred to, in what follows, as social contacts of the user.

In step S102 search criteria data based on the search criteria input by the user is transmitted from the data management module 110 to a business information server DB1 storing a plurality of business entity entries to provide a business directory of business entities. A search is performed by a search engine of the business information server DB1 to provide a list of business entities satisfying the search criteria data input by the user in step S101. The resulting list of business entities is transmitted to the data management server 110 in step S103.

In step S104 at the server the processor 111 determines if any of the social contacts defined by the network user map as being connected to the social network user have an established link with the business entities in the resulting business entity list by referring to the network user map provided by the social networking server SN and the business link data stored in database 114. The number of social contacts and the identification of the social contacts, if any, is determined for each listed business entity.

In step S105 data representative of the list of business entities recovered from the business directory of business information server and relationship data defining the number of linked social contacts and identity of the social contacts linked with each business entity is transmitted to the user terminal 120 for display on the user interface displayed on the screen of the user terminal 120.

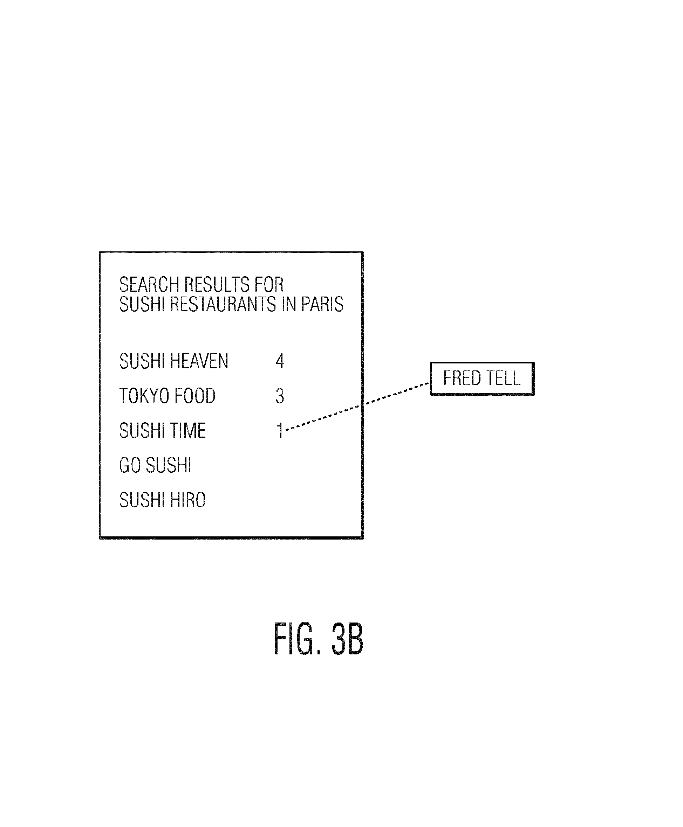

In step S106 the names of the business entities corresponding to the search criteria entered by the user are displayed on the screen of the user terminal 120. Beside each listed business entity name the number of social contacts of the user having a link with the business entity is displayed. For example with reference to Figure 3B the listed named business entities satisfying the search criteria for a sushi restaurant in Paris include a first business entity named "sushi heaven" which is linked with 4 social contacts of the user, a second business entity named "Tokyo Food" which is linked with 3 social contacts and a third business entity named "Sushi Time" which is linked with 1 social contact. Also displayed are two business entities "Go Sushi" and "Sushi Hiro" which have no links with social contacts of the user.

The results may be ranked by number of social contacts with links. The results may also be filtered to only display the name of business entities which have established links with social contacts of the user.

By clicking on the number displayed beside a business entity name, the user may identify the social contact who has an established link with the corresponding business entity. For example by clicking on the "1" beside "Sushi Time" the name "Fred Tell" appears identifying the social contact of the user who has established a link with the business entity "Sushi Time".

In step S106, selecting a business entity, by clicking on the name of the business entity, for example "sushi heaven" the user may access further information related to the business entity, for example opening times, address and contact information, a map indicating the location of the business entity reviews of the service, etc. In this case the request for further information on an identified listed business entity is sent from the user terminal 120 to the data management server 110 in step S107. The processor 111 at the management server 110 determines whether or not information relating to a selected business entity is stored in the database 114. If it is determined that information relating to the selected business entity is stored in the data base that information is retrieved from the 114 database. Alternatively if no such data is stored on the database 114 it is determined if the selected business entity has presence on another business data communication server DN2 to DBn accessible via the network and if the selected business entity has presence, a network connection is established with the other business data communication server to retrieve data related to the selected business entity information from the business information server DB2 to DBn. If further business related information in addition to that stored on the data management database 114 is required the additional business related information for the selected business entity is retrieved from another business information server DB2 to DBn by connecting via the network to the data communications server. The business related information retrieved from external data sources DB1 to DBn may then be stored on database 114 of the data management server 110, thereby establishing a database of business related information for business entities with links to users of the data management module 110.

Using the user interface, the user of user terminal 110 may also establish a connection with a business entity displayed on the screen. This link between the business entity and the user will be stored in database 114 of the data management server. Thus if a social contact of the user searches for a business entity corresponding to the business entity with which the user has established the link an indication that the user has a link with that business entity will be given to the social contact searching the business entities for that search criteria.

An internal database storing information on business-person links, social maps, business related information may thus be generated. Sub-database base can be customised to users of the data management server and search for business related data may be performed on the internal database. Such searches may be performed according to social contacts of the user or according to specific social contacts having established person-business links. It is possible for the user to browse businesses by friends in order to identify all the business entities a specific social contact or group of social contacts have business-person contacts with.

The user interface may also be used initiate or join a discussion of a selected business entity with one or more social contacts or even to recommend the business entity to one or more social contacts. A user may join communities associated with particular business entities or groups of entities. Feeds from the communities can be displayed on the user interface to provide information on the related business entity or entities.

The user interface displayed on the user terminal can display updates provided by social contacts of the social network user, updates provided by business entities with which the user has established a link, updates of social contacts activities with linked business entities.

The user interface also provides a mechanism by which the user may poll the opinions of his social contacts on business entities. By this mechanism, the user may carry out a poll for a favourite or recommended business entity providing a desired product or service. For example the user may invite his social contacts to indicate their favourite dry cleaners, sushi restaurant, yoga centre etc. The poll request is transmitted to the data management server for display on the user interface of social contacts of the user and the choices of the other users are transmitted from the other user terminals to the data management server 110 for display on the screen of the user terminal 120. There is also a mechanism for inviting friends to join the website via the graphical interface

The methods according to the embodiments of the present system enable users to easily find businesses, explicitly establish their own business relationships by establishing person to business links with business entities, view the relationships to businesses of their social contacts by the search results provided, via browsing their friends, via looking at a specific business and the person-business links of that business and via a feed of latest friend activity as it relates to businesses

Thus by virtue of embodiments of the present system users can share businesses with their social contacts. Users may find businesses via social contacts. Social contacts are made aware of a user links with certain business entities, all of which help to facilitate choice of a business entity providing a desired product or service. Moreover businesses are provided with a means for promoting their product or services.

Although the present system has been described hereinabove with reference to specific embodiments, the present system is not limited to the specific embodiments, and modifications will be apparent to a skilled person in the art which lie within the scope of the present system. For instance, while the in the foregoing examples the business management server retrieves information on social contacts of a user from social networking site, it will be appreciated that the social networking site may be hosted and managed by the data management server as part of the service. In some embodiments the user interface provided for interaction with the data management server may be accessible via a social networking site.

Many further modifications and variations will suggest themselves to those versed in the art upon making reference to the foregoing illustrative embodiments, which are given by way of example only and which are not intended to limit the scope of the present system, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the present system.

## Claims

1. A computer implemented method of finding using a social network and a first database, at least one business entity providing a desired product or service, the method comprising:
receiving, via a network from a user terminal of a first social network user, search criteria data representative of search criteria for a desired product or service, the first social network user being associated with a first social graph defining one or more relationships between the first social network user and further social network users of the social network;
transmitting search criteria data to a first database storing a directory of businesses entities providing products or services;
receiving from the database a plurality of identifier data, each identifier data identifying a respective business entity providing a product or service satisfying the search criteria;
determining for each identified business entity if there is a link between the identified business entity and any of the further social network users linked to the first social network user by the first social graph; and
providing, for display on the user terminal, a list of selectable identified business entities and for those identified business identities in the list for which a link between at least one of said further social network user exists, displaying relationship data identifying relationships between the said business entity and any of the further social network users.

2. A method according to claim 1 wherein the search criteria data includes at least one of a keyword characteristic of the desired product or service and a location identifier indicating a desired geographical region of the business entity.

3. A method according to one of the previous claims, further comprising on selection of an identified business entity, determining if the selected business entity has presence on another data communication server accessible via a network and providing business related data on business entities, and if it is determined that the selected business entity has presence on another data communication server, retrieving business related data for the selected business entity from the other data communication server for display of said retrieved business related data on the user terminal.

4. A method according to one of the previous claims, further comprising storing said retrieved business related data in a second database.

5. A method according to claim 4, further determining, on selection of an identified business entity by a user, whether or not information relating to a selected business entity is stored in the second database and if it is determined that information relating to the selected business entity is stored in the second database retrieving said information from the second database, otherwise retrieving information from one or more of the said data communication servers and storing the retrieved information in the second database.

6. A method according to claim 4, further comprising establishing a business-person link between a business entity, selected by the social network user from the displayed list, and the social network user and storing an indication of said business-person link in the second database.

7. A method according to one of the previous claims, further comprising in response to a request, received from the user terminal, for a recommended business entity providing a specific service or product of the further social network users, transmitting recommended business entity data of one or more of the social network users to the user terminal for display on the user terminal.

8. A data management system for providing data on at least one business entity providing a desired product or service, the data management system comprising:
a communication interface for:
connection via a network to a user terminal of a first social network user, for reception of search criteria data representative of search criteria for a desired product or service, the first social network user being associated with a first social graph defining one or more relationships between the first social network user and further social network users of the social network;
transmission of search criteria data to a first database storing a directory of businesses entities providing products or services;
reception from the database a plurality of identifier data, each identifier data identifying a respective business entity providing a product or service satisfying the search criteria;
a processor for:
determining for each identified business entity if there is a link between the identified business entity and any of the further social network users linked to the first social network user by the first social graph; and
providing, for display on the user terminal, a list of selectable identified business entities and for those identified business identities in the list for which a link between at least one of said further social network user exists, displaying relationship data identifying relationships between the said business entity and any of the further social network users.

9. A data management system according to claim 8 wherein the search criteria data includes at least one of a keyword characteristic of the desired product or service and a location identifier indicating a desired geographical region of the business entity.

10. A data management system according to one of the claims 8 and 9, wherein the processor is operable, on selection of an identified business entity, to determine if the selected business entity has presence on another data communication server accessible via a network and providing business related data on business entities, and if it is determined that the selected business entity has presence on another data communication server, to retrieve business related data for the selected business entity from the other data communication server for display of said retrieved business related data on the user terminal.

11. A data management system according to one of the claims 8 to 10, further comprising a memory for storing said retrieved business related data, and a search engine for indexing the stored data.

12. A data management system according to claim 11, wherein the processor is operable on selection of an identified business entity by a user, to determine whether or not business related data for a selected business entity is stored in the memory and if it is determined that business related data for the selected business entity is stored in the memory, to retrieve said business related data from the memory, otherwise retrieving business related data from one or more of the said data communication servers and storing the retrieved business related data in the memory.

13. A data management system according to one of the claims 8 to 12, wherein the processor is operable to establish a business-person link between a business entity, selected by the social network user from the displayed list, and the social network user for storing an indication of said business-person link in the memory.

14. A data management system according to one of the claims 8 to 13, wherein the processor is operable to in response to a request, received from the user terminal, for a recommended business entity providing a specific service or product of the further social network users, to provide recommended business entity data of one or more of the social network users for display on the user terminal.

15. A computer program product for a data-processing device, the computer program product comprising a set of instructions which, when loaded into the data-processing device, causes the device to perform the steps of the method as claimed in claims 1 to 7.
